# DEMANDE DE BREVET EUROPEEN

(11) **EP 4 552 733 A1**
(43) Date de publication de la demande: **14.05.2025**
(21) Numéro de dépôt: 24211449.4
(22) Date de dépôt: 07.11.2024
(51) Int. Cl.: B01J 2/20, B27N 3/28, C10L 5/36, C10L 5/44, B27M 1/02, B27L 11/00, B27N 1/00, B27N 5/00

(54) **PROCÉDÉ DE FABRICATION DE GRANULÉS DE BOIS À PARTIR DE FINES**

(30) Priorité: 07.11.2023 FR 2312064
(71) Demandeur: TotalEnergies OneTech, 92400 Courbevoie (FR); Proxipel SA, 1261 Le Vaud (CH)
(72) Inventeur: JULIEN, Laurent, 69360 SOLAIZE (FR); PFISTER, Richard, 1623 SEMSALES (CH); MARCHAIS, Thibaud, 73470 NOVALAISE (FR)
(74) Mandataire: Lavoix

(57) **Abrégé**

Le procédé de fabrication comprend le passage de fragments de bois dans une filière pour comprimer les fragments de bois en granulés. Au moins 25% massique des fragments de bois sont des fines de granulométrie inférieure ou égale à 2 mm. Le procédé comporte, préalablement au passage dans la filière, une étape d'humidification des fragments de bois.

## Description

La présente invention concerne un procédé de fabrication de granulés de bois. De tels granulés de bois sont également appelés « pellets ».

On connaît déjà, dans l'état de la technique, un procédé de fabrication de granulés de bois, comprenant le passage de fragments de bois dans une filière pour comprimer les fragments de bois en granulés. Dans l'état de la technique, les fragments de bois à partir desquels sont obtenus les pellets sont généralement des copeaux ou des sciures, dont la granulométrie est typiquement comprise entre 3 et 15 mm, avec une variabilité pouvant être importante au cours du temps. Par ailleurs, ces copeaux ou sciures de bois étant humides, typiquement avec un taux d'humidité de l'ordre de 30% (pouvant aller jusqu'à 55%), les procédés de l'état de la technique comprennent habituellement un séchage des fragments de bois préalablement à leur mise en oeuvre dans la filière de granulation.

La manipulation des pellets de bois (manipulations de déchargement, de stockage, d'ensachage) génère habituellement des particules, appelées fines, par abrasion. Ces fines peuvent être récupérées en sortie de crible ainsi qu'en sortie de filtre à manches.

Lorsque les fines sont générées chez des producteurs de pellets, ces fines sont réincorporées aux matières premières, donc mélangées en quantité minoritaire avec de la sciure et du broyat de bois (plaquettes, coupes, etc.) afin de fabriquer des pellets. Il est à noter que la fabrication de pellets à partir de fines non mélangées est réputée complexe, en particulier les pellets obtenus de la sorte présentent généralement une faible durabilité, qui n'est pas satisfaisante pour l'homme du métier. La quantité de fines ainsi réincorporées à la charge principale de sciure et broyat de bois ne dépasse pas 20% en masse, et est habituellement inférieure à 5% en masse.

Lorsqu'elles sont générées sur des lieux de stockage et/ou des sites d'import de pellets, ces fines ne peuvent être réincorporées à une quelconque production et sont évacuées comme sous-produit et donc très peu valorisées. Elles sont vendues à des producteurs d'agro-pellets ou de buches densifiées qui les incorporent (typiquement à raison de moins de 10%) aux autres matières premières. Dans tous les cas, les fines sont très peu valorisées.

En particulier, ces fines ne sont en aucun cas proposées pour obtenir des pellets de classe A1, c'est-à-dire des pellets de qualité maximale telle que définie par la norme DIN ISO 17225-2 de mai 2021.

La norme NF EN ISO 17225-2 définit notamment les caractéristiques suivantes pour des granulés de classe A1 vendus en sacs :
- Une génération de fines de granulométrie inférieure à 3,15 mm, mesurée selon la norme DIN EN 15149-2, inférieure à 0,5 % en masse ;
- Une humidité, mesurée selon les normes DIN EN 14774-2, ISO 18134-1 et ISO 18134-2 d'avril 2024, inférieure à 10% en masse ;
- Une durabilité, mesurée selon la norme DIN EN 15210-1 et ISO17831-1, supérieure à 98% ;
- La présence d'additif inférieure à 2% en masse.

Les normes considérées sont celles en vigueur au moment du dépôt de la demande de brevet, à savoir :
- Normes NF EN ISO 17225-1 de juin 2021 et NF EN ISO 17225-2 de mai 2021 ;
- Norme NF EN 15149-2 de décembre 2010 ;
- Norme NF EN 14774-2 de mars 2010 ;
- Normes NF EN ISO 18134-1 de septembre 2022 et NF EN ISO 18134-2 d'avril 2024 ;
- Norme NF EN 15210-1 de mars 2010;
- Norme NF EN ISO17831-1 de février 2016.

En particulier, toutes les fibres de bois étant cassées dans des fines et la lignine ayant en partie été dégradée lors de l'étape de compression initiale, elles ne permettent pas, dans l'état de la technique, la fabrication de pellets présentant une résistance mécanique satisfaisante répondant aux spécifications de la classe A1. Ainsi, les pellets, préparés à partir de fragments de bois incorporant une quantité minoritaire de fines ont une durabilité plus faible que ce qui est spécifié par les référentiels DIN plus et EN plus en lien avec les prescriptions de la norme ISO 17225-2 pour les pellets de classe A1. En conséquence, de tels pellets génèrent un taux de fines plus important lors des opérations de conditionnement et de manutention.

L'invention a notamment pour but de remédier à ce problème, en proposant un procédé de fabrication de granulés de bois permettant de valoriser les fines tout en fabriquant des granulés de bonne qualité.

A cet effet, l'invention a pour objet un procédé de fabrication de granulés de bois, comprenant une étape de compression de fragment de bois, par passage des fragments de bois dans une filière pour comprimer les fragments de bois en granulés, caractérisé en ce que :
- au moins 25% massique des fragments de bois sont des fines de granulométrie inférieure ou égale à 2 mm,
- le procédé comporte, préalablement au passage dans la filière, une étape d'humidification des fragments de bois,
- l'étape d'humidification est suivie d'une étape d'homogénéisation pendant une durée allant de 5 minutes à 60 minutes, à une température comprise entre la température ambiante et la température ambiante plus 30°C, préalablement à l'étape de compression.

Ainsi, à la différence des procédés de l'état de la technique où les fragments de bois sont séchés avant granulation, le procédé de fabrication des granulés de bois selon l'invention procède à une humidification des fragments de bois à base de fines, afin de les comprimer en des granulés de résistance mécanique satisfaisante.

Avantageusement, le procédé de fabrication selon l'invention permet d'accéder, à partir d'une charge de fragments de bois comprenant une proportion importante de fines, à des granulés (encore appelés indifféremment « pellets ») de qualité supérieure de la classe dite A1 selon les référentiels DIN plus et EN plus en lien avec les prescriptions de la norme ISO 17225-2, comme rappelée précédemment.

Par « fines », comme évoqué précédemment, on désigne les particules générées par abrasion à partir des pellets de bois (au cours des manipulations de déchargement, de stockage, d'ensachage), pouvant être récupérées par exemple en sortie de crible, en sortie de silo de stockage, en tout point d'aspiration, ainsi qu'en sortie de filtre à manches. Les fines présentent une taille moyenne, mesurée par exemple par tamis oscillant dans le plan horizontal, strictement inférieure à 3,15 mm. Les fines issues de pellets de bois se distinguent des particules de bois obtenues par broyage en ce que les fines issues de pellets ont déjà subi les contraintes liées à la formation de pellets, au cours de laquelle la lignine a commencé à se décomposer du fait de l'exposition à la filière pour la formation des pellets. En particulier, les fines issues de pellets de bois sont plus rondes et plus sèches que les particules de bois obtenues différemment.

Dans un mode de réalisation particulièrement avantageux, comme détaillé dans la suite du texte, le procédé de l'invention procède à la fabrication de pellets de bois de qualité A1 selon les référentiels DIN plus et EN plus en lien avec les prescriptions de la norme ISO 17225-2 à partir d'une charge constituée majoritairement de fines. En particulier, la charge des fragments de bois à partir de laquelle sont fabriqués des granulés selon l'invention peut provenir d'un stock de fines directement générées au niveau des opérations de fabrication et/ou de manutention des pellets, sans incorporation d'autres particules, et constitué quasi exclusivement de fines, à l'exception de quelques particules plus grosses résiduelles au sein du stock de fines.

La résistance des granulés obtenus selon l'invention peut encore être optimisée à l'aide de caractéristiques optionnelles qui seront définies ci-dessous. Ainsi, suivant d'autres aspects avantageux de l'invention, le procédé de fabrication comprend une ou plusieurs des caractéristiques suivantes, prises isolément ou suivant toutes les combinaisons techniquement possibles :
- Au moins 50% massique des fragments de bois sont des fines de granulométrie, évaluée selon la norme NF EN ISO 17827-1/2, inférieure ou égale à 2 mm.
- Au moins 75% massique, en particulier au moins 80% massique, et plus particulièrement au moins 90% massique, des fragments de bois sont des fines de granulométrie, évaluée selon la norme *NF EN ISO 17827-1*/*2,* inférieure ou égale à 3,15 mm.
- Lesdits fragments de bois sont constitués d'un stock de fines directement générées au niveau des opérations de production et/ou de manutention de granulés de bois, et formés quasi-exclusivement de fines de granulométrie, évaluée par selon la norme *NF EN ISO 17827-1*/*2,* inférieure ou égale à 3,15 mm.
- La filière est dimensionnée pour comprimer les fragments de bois avec un taux de compression supérieur ou égal à 6, de préférence supérieur à 6,5.
- La filière est cylindrique, et présente de préférence un taux de compression de 7, par exemple un diamètre de 6 mm et une longueur de 42 mm.
- L'humidification des fragments de bois est réalisée pour obtenir un taux d'humidité compris entre 10 et 15%, de préférence de 12%.
- L'étape d'homogénéisation fait suite à une étape de mise au repos.
- L'étape d'homogénéisation est opérée pendant une durée allant de 15 minutes à 30 minutes.

Par « température ambiante », on entend la température de l'environnement entourant les fragments de bois, généralement entre -10°C et +40°C.
- Le procédé de fabrication comporte l'ajout de liant, en particulier d'amidon, mélangé avec les fragments de bois préalablement à la compression.
- Le procédé de fabrication est dépourvu d'ajout de liant tel que de l'amidon.
- Le procédé de fabrication est utilisé pour la fabrication de granulés de bois de qualité A1 définie selon les référentiels DIN plus et EN plus en lien avec les prescriptions de la norme ISO 17225-2.

Différents aspects et avantages de l'invention seront mis en lumière dans la description qui va suivre, donnée uniquement à titre d'exemple non limitatif, et faite en référence aux dessins dans lesquels :

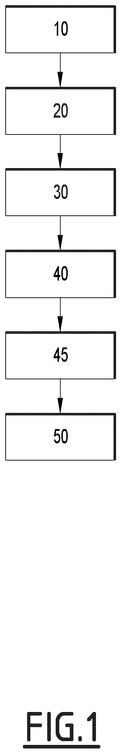

[Fig. 1] la figure 1 est un organigramme schématique représentant des étapes d'un procédé de fabrication selon un exemple de mode de réalisation de l'invention.

Le procédé comporte une étape 10 de fourniture de fragments de bois. Les fragments de bois à partir desquels les pellets sont préparés selon l'invention, comportent des fines de granulométrie inférieure ou égale à 2 mm. Plus particulièrement, au moins 25% en masse, de préférence au moins 50% en masse, des fragments de bois sont des fines de granulométrie inférieure ou égale à 2 mm.

Les fragments de bois peuvent également comporter des fines de granulométrie supérieure à 2 mm et inférieure ou égale à 3,15 mm.

Dans un mode de réalisation particulier, au moins 75% en masse des fragments de bois à partir desquels sont préparés les pellets selon le procédé de l'invention sont des fines de granulométrie inférieure à 3,15 mm (incluant les fines de granulométrie inférieure à 2 mm susmentionnés). On notera que ce pourcentage peut être encore plus élevé, notamment 80% massique de fines, 90% massique de fines, voire amené à 100% massique de fines.

Le reste des fragments de bois sont des résidus non souhaités mais présents en proportions minoritaires en mélange avec les fines. Il peut s'agir de particules plus grosses, de copeaux et/ou de sciures de bois, tant que les pourcentages de fines correspondent aux valeurs mentionnées ci-dessus. En effet, le but de l'invention est de valoriser les fines pour en faire des granulés de bois, si bien qu'un procédé utilisant moins de fines sortirait du cadre de l'invention.

Ainsi, comme évoqué précédemment, dans un mode de réalisation particulièrement avantageux, le procédé est mis en oeuvre avec un stock de fines directement générées au niveau des opérations de fabrication des pellets, sans incorporation d'autres particules. Le stock de fines est ainsi quasi exclusivement constitué des fines à l'exception de la présence en quantité minoritaire de quelques particules plus grosses, sous-produits générés concomitamment aux fines.

Dans un mode de réalisation particulier, le procédé de fabrication des granulés selon l'invention peut comprendre une étape 20 d'ajout d'un liant, par exemple d'amidon naturel ou modifié, mélangé aux fragments de bois. Par exemple, le mélange d'amidon et de fragments de bois comporte entre 1 et 2% en masse de liant, par exemple d'amidon.

L'ajout de liant est tout à fait optionnel. De fait, le procédé selon l'invention permet de réaliser des granulés de qualité satisfaisante sans nécessiter de liant. Ainsi, dans une variante de réalisation, le procédé de fabrication des granulés selon l'invention ne met en oeuvre aucune étape d'ajout de liant.

Le procédé de fabrication des granulés selon l'invention comporte ensuite une étape 30 d'humidification des fragments de bois, de préférence par ajout d'eau.

Avantageusement, l'humidification des fragments de bois est réalisée pour obtenir un taux d'humidité finale compris entre 10 et 15% (c'est-à-dire le rapport entre la masse d'eau finale au niveau des fragments humidifiés et la masse totale des fragments humidifiés). Avantageusement, la durée d'humidification des fragments de bois est inférieure à 15 min.

De préférence, le taux d'humidité final est de 12%. Ce taux d'humidité est optimal pour obtenir la meilleure qualité de granulés. En particulier, la durabilité des granulés est moindre avec un taux d'humidité inférieur, et un taux supérieur peut entrainer une humidité des granulés supérieure aux normes, et/ou des difficultés de manipulation des fragments de bois lors du procédé de fabrication.

Optionnellement, le procédé de fabrication des granulés selon l'invention comporte, après humidification des fragments de bois, et avant homogénéisation, une étape 40 de mise au repos des fragments de bois humidifiés. Cette étape est réalisée sans apport de chaleur, à une température non propice à l'évaporation de l'eau, par exemple à une température comprise entre la température ambiante (T_{amb}) et la température ambiante plus 30 °C (T_{amb}+30°C).

Cette étape 40 de mise au repos peut être opérée pendant une durée allant de 0 à15 minutes.

L'étape d'humidification 30, éventuellement après l'étape de mise au repos 40, est avantageusement suivie d'une étape 45 d'homogénéisation des fragments de bois humidifiés, préalablement à une étape de compression 50.

Cette étape d'homogénéisation 45 est telle qu'elle permet d'assurer l'imbibition des fragments de bois, et une bonne homogénéisation de l'eau au sein des fragments de bois, en particulier des fines, humidifiés. Elle peut être opérée par toute technique de mélange physique, par exemple par brassage dans un tambour.

De préférence, cette étape d'homogénéisation 45 est opérée pendant une durée allant de 5 minutes à 60 minutes, en particulier de 15 minutes à 30 minutes.

De préférence, cette étape d'homogénéisation est opérée à une température comprise entre la température ambiante (T_{amb}) et la température ambiante + 30°C (T_{amb}+30°C).

Par « température ambiante », on entend la température de l'environnement entourant les fragments de bois, généralement entre -10°C et +40°C.

Le procédé de fabrication des granulés selon l'invention comporte ensuite une étape 50 de compression des fragments de bois dans une filière, afin de récupérer les granulés en sortie de la filière.

Afin de réaliser des granulés de qualité optimale, la filière est dimensionnée pour appliquer un taux de compression (longueur du canal de compression sur diamètre des granulés) supérieur ou égal à 6, de préférence supérieur à 6,5. Dans un exemple préférentiel, on utilise un taux de compression de 7.

A cet effet, la filière présente de préférence un canal de compression de forme générale cylindrique, avec un rapport de longueur sur diamètre de 7, par exemple un diamètre de 6 mm pour une longueur de 42 mm.

On notera que le procédé de préparation des granulés selon l'invention est réalisé dans des conditions telles que la température de la filière ne dépasse pas 90°C. Typiquement, la température est comprise entre 75 et 90°C et idéalement entre 85°C et 87°C. De telles températures permettent avantageusement d'éviter toute dénaturation du granulé et de s'affranchir de la nécessité de refroidir la filière. De fait, une température supérieure à 100°C aurait pour effet de dénaturer les granulés et d'augmenter la contrainte thermique sur la filière qui nécessiterait alors d'être refroidie, soit en arrêtant ou diminuant la production, soit en ajoutant de l'eau, ce qui pourrait aboutir à des granulés non conformes à la spécification requise pour les granulés de qualité A1 en termes d'humidité. Ce maintien de la température sous 90°C est en partie dû à la présence d'eau uniformément répartie au niveau de la charge à base de fines mise en oeuvre selon l'invention, résultant de l'étape d'humidification.

On notera que l'invention permet la granulation de fines issues de la manutention des granulés. En plus des sites d'ensachage, l'unité de granulation des fines pourra permettre de traiter les déchets issus des sites de stockages intermédiaires et de chargement vrac dont le nombre est en augmentation pour assurer le maillage des livraisons vrac en cours de développement.

Comme indiqué précédemment, l'invention permet avantageusement la réalisation de granulés de classe A1 définie par la norme NF EN ISO 17225-2.

L'exemple ci-après est donné à titre d'illustration de l'invention, et ne saurait être interprété de manière à en limiter la portée.

### EXEMPLE

La charge de fines mise en oeuvre dans cet essai est constituée d'un mélange de fines récupérées en sortie de crible et de fines récupérées en sortie de filtre à manches d'un site de déchargement / stockage / ensachage de pellets de pellets dans des proportions massiques 90/10.

Le tableau 1 suivant rassemble les spécificités des fines, ainsi que des granulés dont elles sont issues.

La granulométrie (proportions en fines de différents diamètres (P_{fines})) est déterminée selon la norme NF EN ISO 17827-1/2.

Le taux d'humidité est déterminé par les normes NF EN 14774, NF EN ISO 18134-1 et NF EN ISO 18134-2.

La masse volumique apparente est déterminée selon la norme NF EN ISO 17828.

Le diamètre moyen des pellets est déterminé selon la norme NF EN ISO 17829.

La durabilité des pellets est déterminée selon la norme NF EN 15210-1 et NF EN ISO17831-1.

**[Tableau 1] Caractéristiques des fines**

| **Caractéristiques** | **Unité** | **Pellets d'origine** | **Fines crible** | **Fines filtres à manches** |
|---|---|---|---|---|
| Masse volumique apparente | kg/m³ | 660 | 459,07 | 474,87 |
| Répartition granulométrique des fines | | | | |
| P_{fines} < 3,15 mm | % | 0,8 | 76,71 | 69,39 |
| 0 < P_{fines} ≤ 0,2 mm | % | | 0,26 | 0,23 |
| 0,2 < P_{fines} ≤ 0,5 mm | % | | 9,87 | 38,67 |
| 0,5 < P_{fines} ≤ 1 mm | % | | 27,14 | 16,19 |
| 1 < P_{fines} ≤ 2 mm | % | | 33,37 | 11,76 |
| 2 < P_{fines} ≤ 3,15 mm | % | | 6,07 | 2,55 |
| 3,15 < P_{fines} ≤ 8 mm | % | | 23,2 | 28,58 |
| 8 < P_{fines} | % | | 0,09 | 2,03 |
| Granulés : proportion entre 3,15 et 40 mm | % | 99,2 | 0 | 0 |
| Diamètre moyen | mm | 6,1 | SO | SO |
| Humidité | % | 6,1 | 6,55 | 7,42 |
| Durabilité | % | 99 | SO | SO |

Les fines sont préalablement humidifiées par ajout d'eau, avec un taux d'humidification (rapport entre la masse d'eau ajoutée et la masse totale des fragments humidifiés) de 12%, puis laissées au repos à une température comprise entre la température ambiante et la température ambiante plus 30 °C. pendant une durée allant de 0 à15 minutes. Puis s'en suit une étape d'homogénéisation pendant une durée allant de 5 minutes à 60 minutes (idéalement 15 à 30 minutes) à une température comprise entre la température ambiante et la température ambiante plus 30°C.

La charge de fines humidifiées est ensuite conduite dans une filière de granulation. Les conditions de granulation sont les suivantes :
- Filière 6/42 mm (diamètre/longueur),
- Type de canal de compression : cylindrique,
- Taux de compression : 7,
- Taux d'additif (liant) : 0,
- Débit de production : 45 kg/h ; exemple de l'étude de faisabilité, le débit de production pourra atteindre 3 t/h
- Température moyenne de la filière : 79°C.

Les granulés obtenus sont analysés suivant les critères définis selon la norme NF EN 17225-2. En particulier, La durabilité des pellets est déterminée selon la norme NF EN 15210-1 et NF EN ISO17831-1.

Les résultats de l'analyse des granulés sont rassemblés dans le tableau 2 suivant.

**[Tableau 2]**

| Caractéristiques des pellets | Unité | Spécifications DIN plus et EN plus Pellets A1 NF EN ISO 17225-2 | Résultats analyse granulés |
|---|---|---|---|
| Diamètre | mm | 6±1 | 6,02 |
| Longueur | mm | 3,15 ≤ ≤40 | 19,93 |
| P_{fines} < 3,15 mm | % massique | ≤ 0,5 | 0,44 |
| Humidité | % massique | ≤ 10 | 8,07 |
| Durabilité | % massique | ≥ 98 | 99,24 |
| Masse volumique | kg/m³ | 600≤ ≤750 | 663,5 |
| Additif ajouté | % massique | ≤ 2 | 0 |

Les résultats d'analyse des pellets, produits à partir de fines selon un procédé de granulation conforme à l'invention, montrent que les pellets ainsi obtenus satisfont les spécificités de pellets de qualité A1 définie selon les référentiels DIN plus et EN plus en lien avec les prescriptions de la norme NF EN ISO 17225-2.

## Revendications

1. Procédé de fabrication de granulés de bois, comprenant une étape de compression de fragment de bois, par passage des fragments de bois dans une filière pour comprimer les fragments de bois en granulés, **caractérisé en ce que** :
- au moins 25% massique des fragments de bois sont des fines de granulométrie inférieure ou égale à 2 mm,
- le procédé comporte, préalablement au passage dans la filière, une étape d'humidification des fragments de bois,
- l'étape d'humidification est suivie d'une étape d'homogénéisation pendant une durée allant de 5 minutes à 60 minutes, à une température comprise entre la température ambiante et la température ambiante plus 30°C, préalablement à l'étape de compression.

2. Procédé de fabrication selon la revendication 1, dans lequel au moins 50% massique des fragments de bois sont des fines de granulométrie, évaluée selon la norme NF EN ISO 17827-1/2 de juin 2024, inférieure ou égale à 2 mm.

3. Procédé de fabrication selon la revendication 1 ou 2, dans lequel au moins 75% massique, en particulier au moins 80% massique, et plus particulièrement au moins 90% massique, des fragments de bois sont des fines de granulométrie, évaluée selon la norme NF EN ISO 17827-1/2 de juin 2024 inférieure ou égale à 3,15 mm.

4. Procédé de fabrication selon l'une quelconque des revendications précédentes, dans lequel lesdits fragments de bois sont constitués d'un stock de fines directement générées au niveau des opérations de production et/ou de manutention de granulés de bois, et formés quasi-exclusivement de fines de granulométrie, évaluée par selon la norme NF EN ISO 17827-1/2 de juin 2024, inférieure ou égale à 3,15 mm.

5. Procédé de fabrication selon l'une quelconque des revendications précédentes, dans lequel la filière est dimensionnée pour comprimer les fragments de bois avec un taux de compression supérieur ou égal à 6, de préférence supérieur à 6,5.

6. Procédé de fabrication selon l'une quelconque des revendications précédentes, dans lequel la filière est cylindrique, et présente de préférence un taux de compression de 7, par exemple un diamètre de 6 mm et une longueur de 42 mm.

7. Procédé de fabrication selon l'une quelconque des revendications précédentes, dans lequel l'humidification des fragments de bois est réalisée pour obtenir un taux d'humidité compris entre 10 et 15%, de préférence de 12%.

8. Procédé de fabrication selon l'une quelconque des revendications précédentes, dans lequel l'étape d'homogénéisation fait suite à une étape de mise au repos.

9. Procédé de fabrication selon l'une quelconque des revendications précédentes, dans lequel l'étape d'homogénéisation est opérée pendant une durée allant de 15 minutes à 30 minutes.

10. Procédé de fabrication selon l'une quelconque des revendications 1 à 9, comportant l'ajout de liant, en particulier d'amidon, mélangé avec les fragments de bois préalablement à la compression.

11. Procédé de fabrication selon l'une quelconque des revendications 1 à 9, dans lequel ledit procédé est dépourvu d'ajout de liant tel que de l'amidon.

12. Procédé de fabrication selon l'une quelconque des revendications précédentes, pour la fabrication de granulés de bois de qualité A1 définie selon les référentiels DIN plus et EN plus en lien avec les prescriptions de la norme NF EN ISO 17225-2 de mai 2021, en particulier dans lequel la durabilité des pellets, telle que définie dans la norme NF EN 15210-1 et NF EN ISO17831-1, est supérieure à 98%.
